# EUROPEAN PATENT APPLICATION

(11) **EP 2 426 548 A1**
(43) Date of publication of application: **07.03.2012**
(21) Application number: 09844090.2
(22) Date of filing: 22.09.2009
(51) Int. Cl.: G02F 1/1333

(54) **DISPLAY APPARATUS**

(30) Priority: 30.04.2009 KR 20090038517
(71) Applicant: LG Electronics Inc., Seoul 150-721 (KR)
(72) Inventor: HWANG, Sang-Moon, Pyeongtaek-si Gyeonggi-do 451-713 (KR); CHOI, Jin-Su, Pyeongtaek-si Gyeonggi-do 451-713 (KR)
(74) Representative: Katérle, Axel
(86) International application number: PCT/KR2009/005378
(87) International publication number: WO 2010/126208

(57) **Abstract**

Provided is a display apparatus. The display apparatus includes a display module, a thermal reaction pattern changing according to a temperature, a heater generating heat to vary a temperature of the thermal reaction pattern, and a controller controlling the heat generation of the heater. The thermal reaction pattern changes in synchronization with a signal inputted into the controller.

## Description

### TECHNICAL FIELD

The present disclosure relates to a display apparatus.

### BACKGROUND ART

In general, various electronics such as mobile communication terminals, digital cameras, notebooks, monitors, televisions, etc. are include display apparatuses for displaying images.

As our information society develops, needs for diverse forms of display apparatuses are increasing. Accordingly, research has been carried out on various display apparatuses such as liquid crystal display devices (LCDs), plasma display panels (PDPs), electro luminescent displays (ELDs), and vacuum fluorescent displays (VFDs).

### DISCLOSURE OF THE INVENTION

### TECHNICAL PROBLEM

Embodiments provide a display apparatus in which an outer appearance thereof is improved to allow a user to feel an esthetic appearance.

### TECHNICAL SOLUTION

In one embodiment, a display apparatus includes: a display module; a thermal reaction pattern changing according to a temperature; a heater generating heat to vary a temperature of the thermal reaction pattern; and a controller controlling the heat generation of the heater, wherein the thermal reaction pattern changes in synchronization with a signal inputted into the controller.

In another embodiment, a display apparatus including a display area on which an image is displayed and a non-display area on which an image is not displayed includes: a display module; a thermal reaction pattern disposed on the non-display area, the thermal reaction pattern changing according to a temperature; and a heater generating heat to vary a temperature of the thermal reaction pattern, wherein the thermal reaction pattern is displayed or not displayed on the non-display area according to an image appearing on the display area.

The details of one or more embodiments are set forth in the accompanying drawings and the description below. Other features will be apparent from the description and drawings, and from the claims.

### ADVANTAGEOUS EFFECTS

According to the embodiments, the pattern disposed on the front surface of the display apparatus may change in synchronization with the input signal through the temperature control. Thus, the outer design of the display apparatus may be improved to perform the main function for displaying an image and also improve user's sensitive satisfaction.

### BRIEF DESCRIPTION OF THE DRAWINGS

Fig. 1 is a block diagram of a display apparatus according to an embodiment.
Fig. 2 is a schematic view illustrating a display area and a non-display area of the display apparatus.
Fig. 3 is a sectional view of a structure including a thermal reaction pattern according to an embodiment.
Fig. 4 is a graph illustrating results obtained by measuring a temperature change according to constitutions of a heat transfer layer including the thermal reaction pattern.
Fig. 5 is a graph illustrating results obtained by measuring a temperature change according to voltages applied to a heater.
Figs. 6 and 7 are views of a thermal reaction pattern according to a first embodiment.
Fig. 8 is a view of a heater according to an embodiment.
Fig. 9 is a block diagram of a controller according to an embodiment.
Fig. 10 is a circuit diagram illustrating a voltage regulator of Fig. 9 according to an embodiment.
Fig. 11 is a circuit diagram illustrating a switching part of Fig. 9 according to an embodiment.
Fig. 12 is a circuit diagram illustrating a power supply part of Fig. 9 according to an embodiment.
Fig. 13 is a circuit diagram illustrating a MICOM of Fig. 9 according to an embodiment.
Fig. 14 is a circuit diagram illustrating a relay of Fig. 9 according to an embodiment.
Figs. 15 to 18 are views of a thermal reaction pattern according to a second embodiment.
Fig. 19 is a view of a heater according to another embodiment.
Fig. 20 is view of a thermal reaction pattern according to a third embodiment.
Figs. 21 to 23 are views of a thermal reaction pattern according to a fourth embodiment.
Fig. 24 is view of a thermal reaction pattern according to a fifth embodiment.

### BEST MODE FOR CARRYING OUT THE INVENTION

Hereinafter, exemplary embodiments will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, deleting, and changing, and will fully convey the concept of the invention to those skilled in the art.

In the following explanation, the terms "include/comprise" do not exclude different elements or steps from those enumerated.

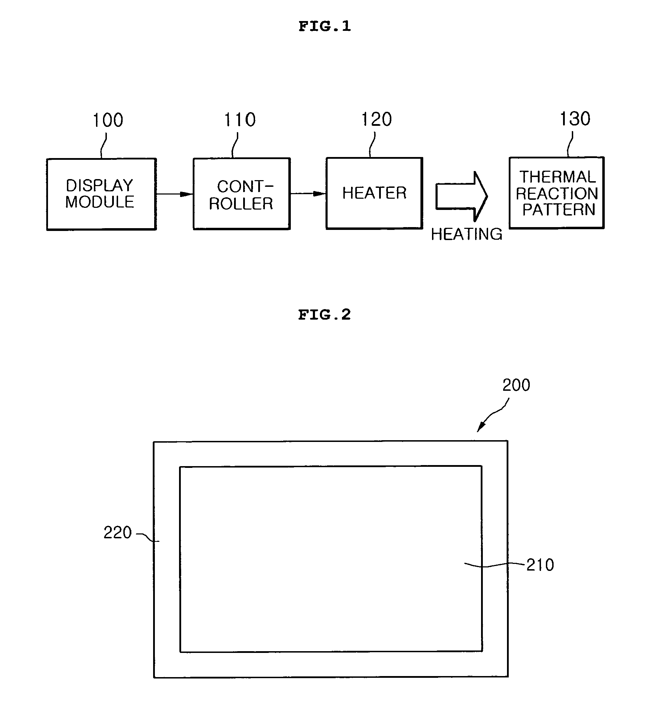

Fig. 1 is a block diagram of a display apparatus according to an embodiment. The display apparatus may include a display module 100, a controller 110, a heater 120, and a thermal reaction pattern 130.

Referring to Fig. 1, the display module 100 emits light according to an inputted image signal to display an image. The display module 100 may be a liquid crystal display module. In this case, the display module may include a liquid crystal panel (not shown) and a backlight unit (not shown).

The liquid crystal panel (not shown) may display an image using light supplied from the backlight unit (not shown). For this, the liquid crystal panel (not shown) may include a liquid crystal layer, a TFT substrate, and a color filter substrate. Here, the TFT substrate and the color filter substrate face each other with the liquid crystal layer therebetween.

However, exemplary embodiments are not limited to the above-described liquid crystal display apparatus. For example, the exemplary embodiments may be applied to various display apparatuses such as plasma display panels (PDPs), electro luminescent displays (ELDs), and vacuum fluorescent displays (VFDs).

The controller 110 may generate a control signal for controlling the heater 120 using a signal inputted from the display module 100. Also, the controller 110 may supply the control signal into the heater 120 to control heat generation of the heater 120.

The heater 120 may generate heat according to the control signal inputted from the controller 110 to apply the heat to the thermal reaction pattern 130. Then, the thermal reaction pattern 130 may be changed in temperature by the applied heat.

The thermal reaction pattern 130 may be disposed on a front surface of the display apparatus to allow a user to view the inside of the display apparatus. Also, the thermal reaction pattern 130 may include a thermochromic pigment that changes in color on the basis of a preset critical temperature.

The thermal reaction pattern 130 may vary in temperature by the heat generated from the heater 120. In detail, the thermochromic pigment may change in color according to a temperature change, and thus the thermal reaction pattern 130 including the thermochromic pigment may vary in temperature.

For example, the thermal reaction pattern 130 may include a thermochromic pigment that changes in color on the basis of a critical temperature. Also, the thermal reaction pattern 130 may change in color so that specific patterns, characters, or numerals appear or disappear according to a temperature change due to the heat generated in the heater 120.

The thermochromic pigment may be one of thermo pigments. That is, the thermochromic pigment is a special pigment that changes from a colorlessness into a color or from a color to other colors when the temperature exceeds a reference temperature on the basis of a predetermined reference temperature range. A color change temperate range may vary according to production conditions. However, a generally allowable temperature range may be about 15 degrees below zero to about 70 degrees above zero. A color concentration may vary according mixing conditions of pigments.

Also, as described above, the thermal reaction pattern 130 may change in synchronization with a signal inputted to the controller 110. The signal inputted to the controller 110 may be a signal inputted from the outside of the display apparatus or a signal generated in the display apparatus.

For example, the signal inputted to the controller 110 may be a signal having information with respect to a power on/off state of the display apparatus, a signal having information with respect to an inputted image or voice signal, a signal generated in the display apparatus such as a signal having information with respect to an external input mode, a signal inputted by a user through a user input unit such as a remote controller or on screen display (OSD), or a signal inputted from an external apparatus of the display apparatus.

In the display apparatus according to an embodiment, the controller 110 may control the heater 120 so that the thermal reaction pattern 130 changes in synchronization with the operation of the display apparatus.

That is, the controller 110 may receive a signal supplied from the display module 100, e.g., a signal having information with respect to the operation of the display module 100 to generate a control signal according to the inputted signal, thereby supplying the control signal into the heater 120. Then, the heater 120 may generate heat according to the supplied control signal to change a temperature of the thermal reaction pattern 130. As a result, the thermal reaction pattern 130 may change in synchronization with the operation of the display module 100.

According to the current embodiment, the thermal reaction pattern 130 may change in synchronization with the operation of the display module 100 at an operation time point of the display module 100. That is, the controller 110 may receive information with respect to the present operation state of the display module 100 to control the heater 120 so that the thermal reaction pattern 130 is displayed during a preset specific operation period of the display module 100. For example, the controller 110 may apply the control signal to the heater 120 to apply the heat to the thermal reaction pattern so that patterns depending on the thermal reaction pattern 130 appear during a predetermined time from a time point at which the supply of a power into the display module 100 starts.

According to another embodiment, the thermal reaction pattern 130 may change in synchronization with an image displayed on the display module 100. In this case, the controller 110 may receive information with respect to the present image displayed on the display module 100 to control the heater 120 so that the thermal reaction pattern 130 changes to correspond to the displayed image. For example, when a preset specific image is displayed on the display module 100, the controller 110 may control the heater 120 so that a pattern corresponding to the specific image appears using the thermal reaction pattern 130.

According to further another embodiment, the thermal reaction pattern 130 may change in synchronization with a kind of signal inputted to the display module 100. That is, the controller 110 may receive information with respect to the signal inputted to the display module 100 to control the heater 120 so that the thermal reaction pattern 130 changes to correspond to a kind of inputted signal. That is, when an image corresponding to a preset kind of signal is displayed on the display module 100, the controller 110 may control the heater 120 so that a pattern corresponding to the signal appears using the thermal reaction pattern 130.

For example, the signal inputted to the display module 100 may be distinguished according to whether the signal is an image signal or a voice signal such as a DVD signal, an AVI signal, an SD image signal, an HD image signal, and an MP3 signal, or distinguished according to a resolution when the signal is the image signal. Thus, the pattern corresponding to a kind of distinguished input signal may appear using the thermal reaction pattern 130.

Fig. 2 is a schematic view illustrating a display area and a non-display area of the display apparatus. That is, Fig. 2 illustrates a front surface of the display apparatus 200, i.e., a shape of the display apparatus 200 when viewed from a user side.

Referring to Fig. 2, the display apparatus 200 may include a display area 210 on which an image is displayed on the display apparatus 200 and a non-display area 220 on which an image is not displayed. The non-display area 220 may be disposed on an outer area of the display apparatus 200 to surround the display area 210. In general, a light blocking pattern may be disposed on the non-display area.

Thus, mechanisms disposed outside the display area 210 within the display apparatus 200 except for an image to be displayed may be not seen by the user due to the non-display area 220.

According to the current embodiment, as shown in Fig. 1, the thermal reaction pattern 130 may be disposed on the non-display area 220 on which an image is not displayed to improve an outer appearance of the display apparatus 200 without affecting the image to be watched by the user.

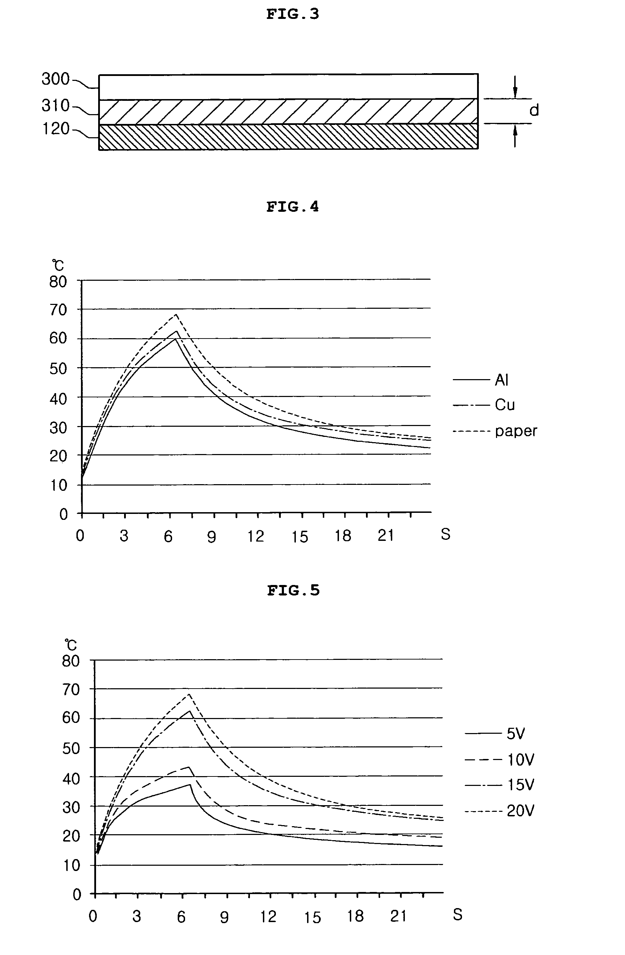

Fig. 3 is a sectional view of a structure including the thermal reaction pattern 130 according to an embodiment.

Referring to Fig. 3, a transparent window 300 may be disposed on a front surface of the display module 100 to transmit light emitted from the display module 100. Also, the transparent window 300 may protect the display module 100 against an external impact. For example, the transparent window 300 may be formed of a plastic material such as acrylic or a glass material having impact resistance and light transmittance. Also, the transparent window 300 may be formed of a film material such as polyethylen terephthalate (PET) and attached to the front surface of the display module 100.

As described above, the heater 120 may generate heat according to a heating voltage supplied from the controller 110 to change a temperature of the thermal reaction pattern 130 according to the heat generation of the heater 120.

The heater may include a plurality of film heaters. Here, a thin film may be coated with carbon heaters connected to each other in parallel and an electrode may be disposed using a cooper film, and then the films may be laminated to manufacture each of the film heaters. When a voltage is applied to the film heaters, the carbon heaters connected in parallel generate heat. As a result, the heater 120 may generate heat.

In this case, the control signal supplied from the controller 110 to the heater 120 may be realized as a heating voltage applied to the film heaters. Thus, the controller 110 may control the heating voltage to control the heat generation of the heater 120.

A heat transfer layer 310 may be disposed between the transparent window 300 and the heater 120. The thermal reaction pattern 130 may be disposed on one surface of the heat transfer layer 310. The heat generated in the heater 120 may be transferred into the thermal reaction pattern 130 through the heat transfer layer 310.

For example, since the thermochromic pigment exists in powder or compressed form at room temperature, the thermochromic pigment may be mixed with a diluting agent to change into ink form and then the mixture may be printed on one surface of the heat transfer layer 310 using a silk screen or spray injection process to manufacture the heat reaction pattern 130.

As described above, the thermal reaction pattern 130 may include the thermochromic pigment that changes in color on the basis of the critical temperature. Thus, when the heater 120 may heat to reach the critical temperature, the thermal reaction pattern 130 may change so that patterns, characters, or numerals printed with the thermochromic pigment appear.

For example, the thermochromic pigment constituting the thermal reaction pattern 130 may show a black color at the preset critical temperature and a colorlessness at a temperature greater than the critical temperature. Thus, the thermochromic pigment may be printed on the non-display area to form the thermal reaction pattern 130.

In this case, when the thermal reaction pattern 130 has a temperature less than the critical temperature, the thermochromic pigment may show the black color. Thus, the pattern printed with the thermochromic pigment may not visually appear. However, when the thermal reaction pattern 130 has a temperature greater than the critical temperature by the heating of the heater, the pattern printed with the thermochromic pigment may appear.

Also, the thermochromic pigment may change into different colors except for the black color at a temperature greater than the critical temperature.

As described above, to change the thermal reaction pattern 130 in synchronization with the operation of the display module 100, the heater 120 may generate heat under the control of the controller 110 to allow a temperature of the thermal reaction pattern 130 to reach the critical temperature.

That is, to prevent the temperature of the thermal reaction pattern 130 from reaching the critical temperature due to external parameters except for the heating of the heater 120 under the control of the controller 110, e.g., an increase of an ambient temperature of the display apparatus 200, the thermochromic pigment may have a critical temperature greater than an allowable maximum temperature of the ambient temperature.

Also, since the maximum temperature may be different according to national or local area, the thermal reaction pattern 130 may be manufactured using thermochromic pigments having critical temperatures different from each other according to the national or local area.

For example, when it is assumed that a maximum temperature of summer in Korea is about 38 degrees, the thermochromic pigment may be manufactured to have a critical temperature greater than about 38 degrees. When the display apparatus 200 is used for an area having a temperature less than the maximum temperature such as Russia, the thermochromic pigment may be manufactured to have a critical temperature less than about 38 degrees, thereby reducing power consumption for displaying the thermal reaction pattern 130. Also, in case of an area having a high maximum temperature such as Africa, the thermochromic pigment may be manufactured to have a critical temperature greater than about 40 degrees.

Regardless of the control of the controller 110, as the ambient temperature of the display apparatus 200 increases above the critical temperature of the thermal reaction pattern 130, it may be necessary to prevent the thermal reaction pattern 130 from being displayed at an undesired time point.

For this, the display apparatus 200 according to the current embodiment may further include a temperature measurement part (not shown) for measuring a temperature of the thermal reaction pattern 130 and a cooling part (not shown).

For example, the temperature measurement part (not shown) measures a temperature of the thermal reaction pattern 130 or the heat transfer layer 310 on which the thermal reaction pattern 130 is printed. When the measured temperature increases to approach the critical temperature, it is determined whether the temperature increases by heat generated in the heater 120 according to the control signal outputted from the controller 110, i.e., whether a heating start signal for starting the heating of the heater 120 is outputted from the controller 110.

When the determination result shows that the temperature of the thermal reaction pattern 130 approaches the critical temperature even though the heating start signal is not outputted from the controller 110, the cooling part (not shown) cools the thermal reaction pattern 130 to decrease the temperature of the thermal reaction pattern 130. Thus, it may prevent the thermal reaction pattern 130 from changing by the increase of the ambient temperature at the undesired time point.

Also, when excessive heat is generated from the heater 120 to allow the temperature of the thermal reaction pattern 130 to reach the critical temperature, driving circuits may be damaged by the heat of the heater 120 to affect the operation of the display module 100. Thus, to prevent the heat from affecting the operation of the display module 100, the thermochromic pigment included in the thermal reaction pattern 130 may have a critical temperature equal to or less than about 50 degrees.

The heat transfer layer 310 may be formed of one of paper, acrylic, aluminum (Al), and copper (Cu).

When the heat transfer layer 310 is formed of one of paper, Al, and Cu, the thermal reaction pattern 130 may be disposed on a front surface of the heat transfer layer 310 to allow the user to see the thermal reaction pattern 130.

Also, when the heat transfer layer 310 is formed of transparent acrylic, the thermal reaction pattern 130 may be disposed on a back surface of the heat transfer layer 310.

The front surface of the heat transfer layer 310 represents a surface adjacent to the transparent window 300 of both sides of the heat transfer layer 310, and the back surface represents a surface adjacent to the heater 120.

Fig. 4 illustrates experimental results obtained by measuring a temperature change depending on a time at each of the paper, Al, and Cu constituting the heat transfer layer 310. That is, Fig. 4 illustrates results obtained by measuring a temperature change of each materials when a voltage having about 15V is applied to the heater 120 constituted by the film heaters.

Referring to Fig. 4, all of the paper, Al, and Cu may reach a temperature of about 38 degrees to about 50 degrees that are critical temperature within about 3 seconds. However, when the heat transfer layer 310 formed of paper, Al, or Cu is disposed between the thermal reaction pattern 130 and the heater 120, a thermal resistance may occur. Also, the more the thermal resistance increases, the more a time for which a temperature of the thermal reaction pattern 130 reaches the critical temperature by the heating of the heater 120 increases.

Al may generate a thermal resistance of about 0.05°C/w, and Cu may generate a thermal resistance of about 0.026°C/w. On the other hand, since the paper may form the thermal transfer layer 310 having a thickness of a micro unit, i.e., a thickness significantly less than that of Al or Cu, the thermal resistance may be very less. Thus, a time for which a temperature of the thermal reaction pattern 130 reaches the critical temperature may be reduced.

According to the current embodiment, a structure including the thermal reaction pattern 130 described with reference to Fig. 3 may be disposed on the non-display area of the display apparatus 200.

In this case, the heat transfer layer 310 contacting the heater 120 may be manufactured using a paper having a black color. Then, the thermochromic pigment may be printed on the front surface of the heat transfer layer 310 formed of the black paper to manufacture the thermal reaction pattern 130. Also, since the thermochromic pigment has a black color at a temperature less than the critical temperature and a colorlessness at a temperature greater than the critical temperature, the pattern printed with the thermochromic pigment may be visually seen by the user only when the temperature of the thermal reaction pattern 130 reaches the critical temperature.

The thermochromic pigment may have colors different from the black color except for the above-described colorlessness at a temperature greater than the critical temperature.

The heat transfer layer 310 formed of the paper may have a light block effect for covering the non-display area 220 of the display apparatus 200. For this, the heat transfer layer 310 formed of the paper may have a thickness d of about 0.15 mm or more.

Also, the heat transfer layer 310 should have a low thermal resistance enough to allow a temperature of the thermal reaction pattern 130 to reach a critical temperature greater than about 38 degrees within three seconds. For this, the heat transfer layer 310 formed of the paper may have a thickness d of about 0.5 mm or less.

Fig. 5 is a graph illustrating results obtained by measuring a temperature change according to voltages applied to the heater 12. For example, Fig. 5 illustrates results obtained by measuring temperatures changing by supplying heating voltages of about 5V, 10V, 15V, and 20V to the heater 120 constituted by the film heaters described with reference to Fig. 3.

Referring to Fig. 5, when a voltage of about 10V or more is supplied to the heater 120, a temperature of the heater 120 may reach a temperature of about 38 degrees or more that is the critical temperature of the thermal reaction pattern 130 with three seconds. However, when a voltage greater than about 15V is supplied to the heater 120, a temperature of the heater 130 may reach a high temperature approaching about 70 degrees. Thus, the display module 100 may be affected in operation by the temperature.

Thus, to allow a temperature of the thermal reaction pattern 130 to reach the critical temperature within a quick time, e.g., three seconds without affecting the operation of the display module 100, a voltage supplied from the controller 110 to the heater 120 may range about 10 V to about 15 V.

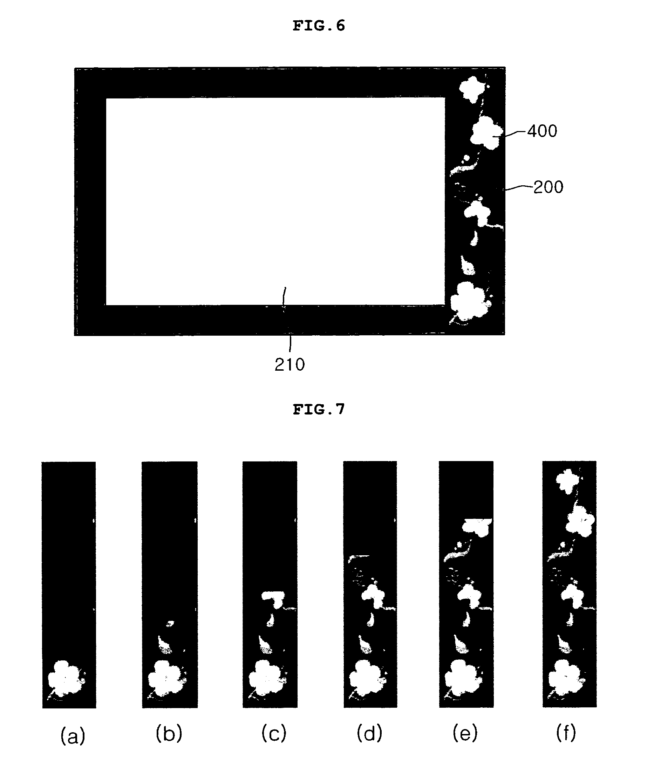

Fig. 6 is a view of a thermal reaction pattern appearing on a front surface of a display apparatus according to a first embodiment.

Referring to Fig. 6, a thermal reaction pattern 400 formed of a thermochromic pigment such as a thermo pigment may be disposed on a non-display area 220 of a front surface of a display apparatus 200. In detail, a paper printed with the thermochromic pigment may be disposed on a back surface of a transparent window exposed toward a user as described with reference to Fig. 3, and a heater for generating heat may be disposed on a back surface of the paper.

Referring to Fig. 6, a specific pattern may be printed using the thermochromic pigment such as thermo pigment on a side of the non-display area 220 to manufacture the thermal reaction pattern 400. Thus, the thermal reaction pattern 400 may change in temperature by heat generated in the heater 120 disposed adjacent thereto.

That is, the heater 120 may generate heat under the control of a controller 110. Thus, the thermal reaction pattern 400 may increase in temperature by the generated heat. When a temperature of the thermal reaction pattern 400 reaches a preset critical temperature, the thermochromic pigment may change in color.

In more detail, the non-display area 200 of the display apparatus 200 has a black color, and the thermochromic pigment printed with the specific pattern on the non-display area 220 may have a black color at a temperature less than the critical temperature and a specific color, e.g., a pink color at a temperature greater than the critical temperature.

In this case, the controller 110 may supply a heating voltage to a temperature of the heater 120, and thus a temperature of the thermochromic pigment constituting the thermal reaction pattern 400 may reach the critical temperature with several seconds to show the pattern of thermal reaction pattern 400 printed with the thermochromic pigment.

The pattern of the thermal reaction pattern 400 printed with the thermochromic pigment as shown in Fig. 6 may be shown in synchronization with an operation time point of the display module 100.

According to an embodiment, the pattern of the thermal reaction pattern 400 printed with the thermochromic pigment may appear for a predetermined time after a voltage is supplied to the display apparatus.

For example, when the user pushes a power switch of the display apparatus, the power supply into the display module 100 may start. Then, the controller 110 may receive a signal for informing the start of the power supply from the display module 100. Thereafter, the controller 110 may supply a preset heating voltage to the heater 120 to generate heat through the heater 120.

When a temperature of the thermochromic pigment constituting the thermal reaction pattern 400 reaches a critical temperature by the heat generated by the heater 120, a pattern of the thermal reaction pattern printed with the thermochromic pigment may appear. Also, after a predetermined time elapses, the controller 110 may stop the supply of the heating voltage. Thus, the heating of the heater 120 may be stopped to decrease the temperature of the thermochromic pigment to a temperature less than the critical temperature. As a result, after a predetermined time elapses after a voltage is supplied to the display apparatus, the visibly appearing pattern of the thermal reaction pattern 400 printed with the thermochromic pigment may disappear.

When a power is supplied to the display module 100, a power on sequence period for displaying an image exists. Here, an image is not displayed for the power one sequence period. Thus, it may take about ten seconds until the image is displayed after the user pushes the power switch of the display apparatus.

Thus, the controller 110 may allow the pattern printed with the thermochromic pigment to appear on the non-display area 220 after a power is supplied to the display module 100 and also allow the pattern to disappear before the image is displayed to control the pattern of the thermal reaction pattern 400 printed with the thermochromic pigment so that the pattern appears for about three seconds to about six seconds.

As described above, since the pattern allow the user to feel an esthetic appearance may be visibly expressed on the non-display area 220 for a time until the image is displayed after the power is supplied, it may prevent the user from feeling boring for the standby time.

Referring to Fig. 7, the thermal reaction pattern 400 may be divided into a plurality of areas. The divided areas may independently change in temperature by the control of the controller 110.

For example, the heater disposed under the heat transfer layer on which the thermal reaction pattern 400 is printed may include a plurality of heating units independently controlled by the controller 110. As described above, since the heater is divided into the plurality of heating units, the thermal reaction pattern 400 may be divided into a plurality of areas corresponding to the heating units.

That is, when the heater includes n heating units, the thermal reaction pattern disposed above the heater may be divided into n areas. Here, the divided n areas and the n heating units may overlap each other in position.

Referring to Fig. 7, the divided areas of the thermal reaction pattern 400 may be successively operated with a time interval. Thus, a portion of the pattern printed with the thermochromic pigment may visibly appear according to a time and then the whole pattern may gradually appear.

According to an embodiment, a lowermost portion of the pattern printed with the thermochromic pigment may visibly appear at an initial time point at which the thermal reaction pattern 400 appears as shown in Fig. 7A. Thereafter, as shown in Figs. 7B to 7E, upper portions of the pattern may successively appear. Then, as shown in Fig. 7F, the whole pattern printed with the thermochromic pigment may appear at a final time point.

As described above, since the thermal reaction pattern 400 may be divided in the plurality of area and successively operated, the pattern printed with the thermochromic pigment may gradually appear. Thus, this may allow the user to feel an esthetic appearance to further improve the design effect of the display apparatus.

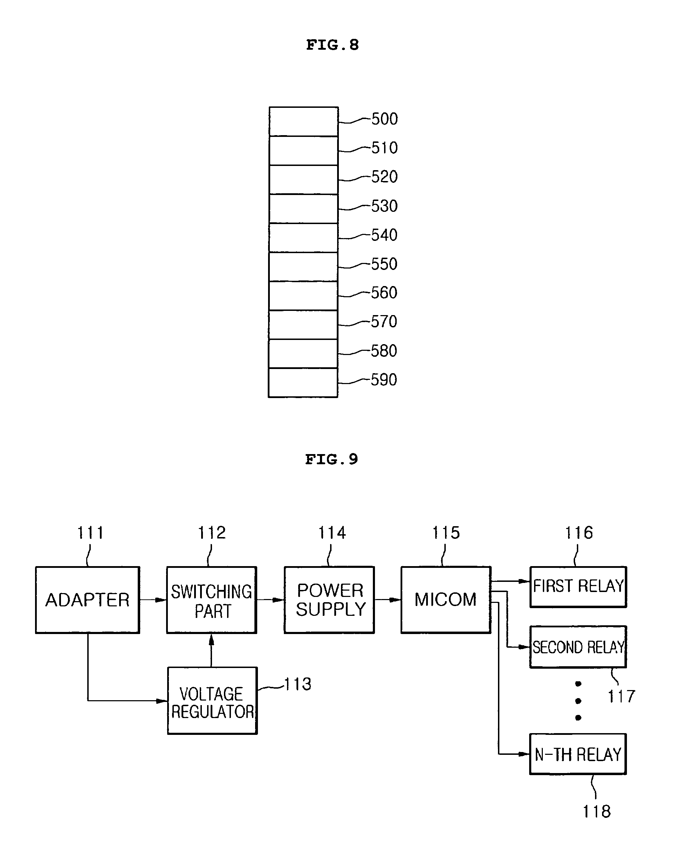

Fig. 8 is a view of the heater 120 according to an embodiment. As described above, Fig. 8 illustrates a structure of a heater 120 in which a thermal reaction pattern 400 is divided into a plurality of areas and independently operated.

Referring to Fig. 8, the heater 120 may include a plurality of heating units 500 to 590. The plurality of heating units 500 to 590 may receive a control signal from a controller 110 and be independently operated. Also, the plurality of heating units 500 and 590 may be disposed on positions corresponding to the plurality of divided areas of the thermal reaction pattern 400.

For example, as shown in Fig. 8, when the heater 120 includes ten heating units 500 to 590, the thermal reaction pattern 400 may be displayed on ten areas corresponding to the heating units 500 to 590, respectively. In this case, the controller 110 may supply a heating voltage to the heating unit disposed at a position corresponding to a specific area of the thermal reaction pattern 400 to visibly show the specific area of the thermal reaction pattern 400.

That is, the heating voltage may be successively supplied from a lower end toward an upper end into the heating units 500 to 590 with a predetermined time interval to allow the pattern printed with the thermochromic pigment to gradually appear on a non-display area as shown in Fig. 7. In more detail, when the pattern printed with the thermochromic pigment is gradually expressed for five seconds using the ten heating units 500 to 590, the controller may successively supply the heating voltage into the heating units 500 to 590 with a time interval of about 0.5 seconds.

Also, each of the heating units 500 to 590 may include one or more film heaters.

The present disclosure is not limited to the control method described with reference to Figs. 7 and 8. That is, the visibly appearing order of the divided areas of the thermal reaction pattern 400 or the position and number of the heating units included in the heater 120 may vary as necessary.

Fig. 9 is a block diagram of a controller 110 according to an embodiment. The controller may include an adapter 111, a switching part 112, a voltage regulator 113, a power supply part 114, a MICOM 115, and a plurality of relays 116 to 118.

The adapter 111 supplies a heating voltage supplied from the controller 110 into the heater 120, and the voltage regulator 113 drops down the supplied voltage to supply the down voltage into the switching part 112.

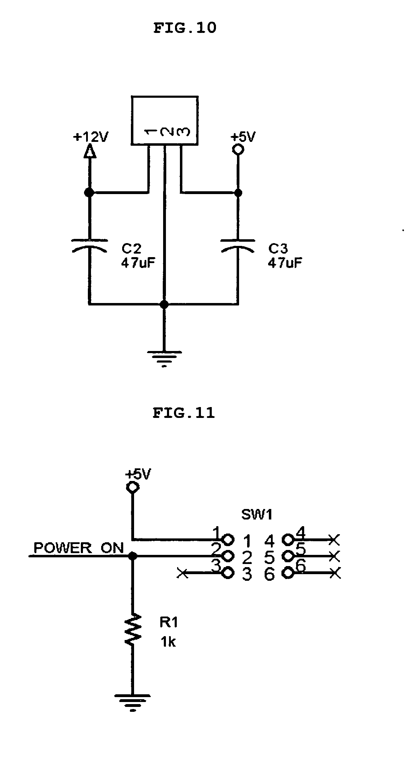

Fig. 10 is a view of the voltage regulator 113 according to an embodiment. The voltage regulator 113 drops down a voltage of about 12 V supplied from the adapter 111 into about 5 V to supply the voltage to the switching part 112.

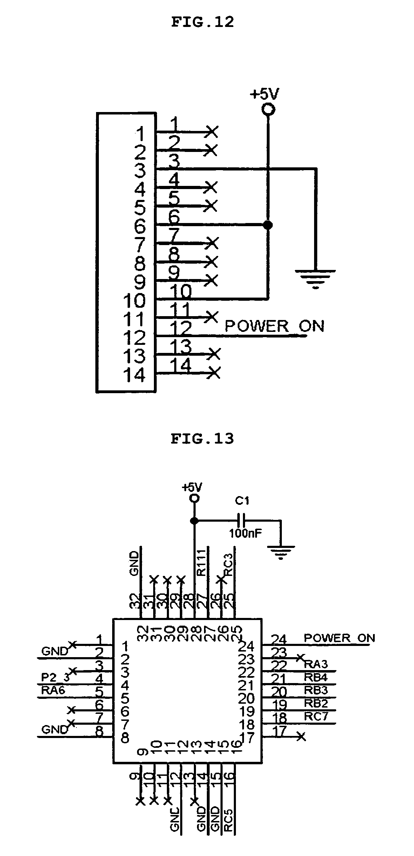

Also, Fig. 11 is a view of the switching part 112 according to an embodiment. When the switching part 112 is turned on, a voltage is supplied into the plurality of relays 116 to 118 through the power supply part 114 as shown in Fig. 12.

The MICOM 115 controls the plurality of relays 116 to 118 using the voltage of about 12 V supplied from the power supply part 114. Fig. 13 is a view of the MICOM 115 according to an embodiment.

The plurality of relays 116 to 118 may correspond to the heating units independently operated as described above, respectively. That is, as shown in Fig. 8, when the heater 120 includes the ten heating units 500 to 590, the ten relays may be connected corresponding to the ten heating units 500 to 590.

The plurality of relays 116 to 118 may supply a heating voltage to the corresponding heating units under the control of the MICOM. That is, according to a control signal inputted from the MICOM 115, the plurality of relays 116 to 118 may supply a heating voltage into the whole heating units or a portion of the heating units, or successively supply a heating voltage into the heating units.

Since the method in which the plurality of relays 116 to 118 supply the heating voltage under the control of the MICOM 115 is equal to the control method of the controller 110 as described with reference to Figs. 7 and 8, its descriptions will be omitted.

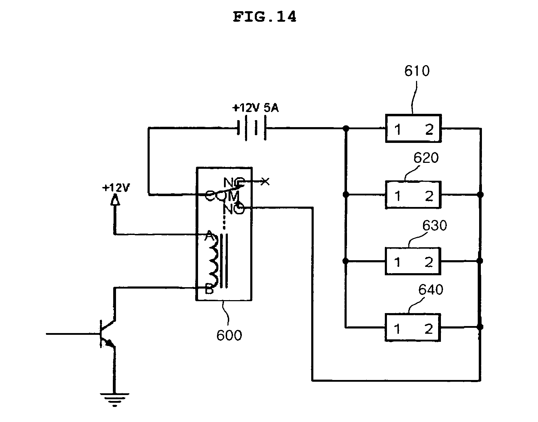

Fig. 14 is a view illustrating one of the relays 116 to 118 according to an embodiment. One heating unit may be connected to the illustrated relay 600. The heating unit may include a plurality of film heaters 610 to 640 connected to each other.

Referring to Fig. 14, the plurality of film heaters 610 to 640 may be connected to an output terminal of the relay 600. The relay 600 may supply a heating voltage of about 12 V supplied through the power supply part 114 into the plurality of film heaters 610 to 640 according to a control signal inputted from the MICOM 115.

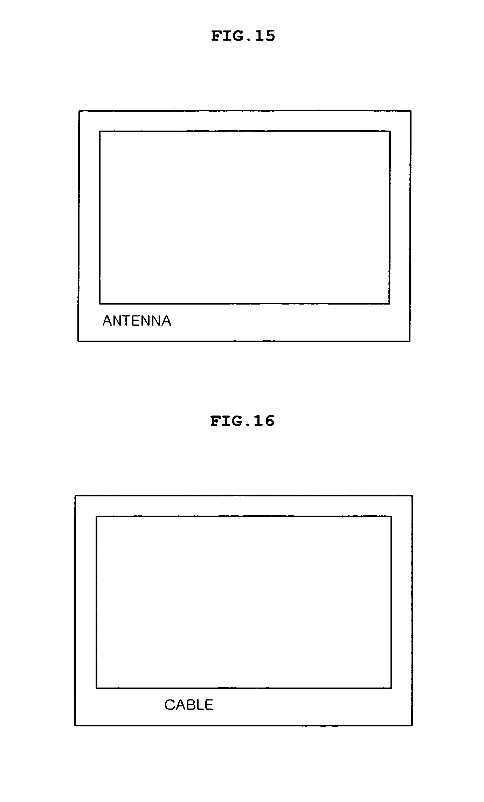

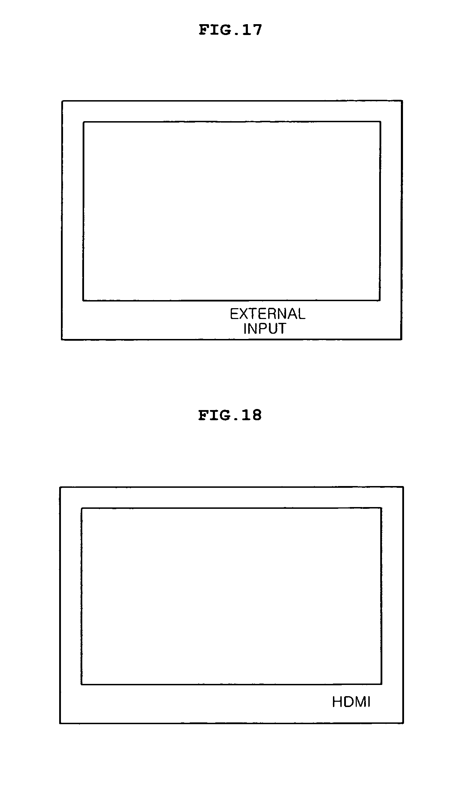

Figs. 15 to 18 are views of a thermal reaction pattern according to a second embodiment. The thermal reaction pattern may change in synchronization with an image displayed on a display module 100.

Referring to Figs. 15 to 18, characters such as "Antenna", "Cable", "External input", and "HDMI" may be printed on a lower end of a non-display area of a display apparatus using a thermochromic pigment such as thermo pigment to manufacture a thermal reaction pattern.

In the case, a controller 110 may receive a signal informing an input mode of a presently displayed image from the display module 100 to control a heater 120 according to the inputted signal, thereby change a thermal reaction pattern disposed on a non-display area.

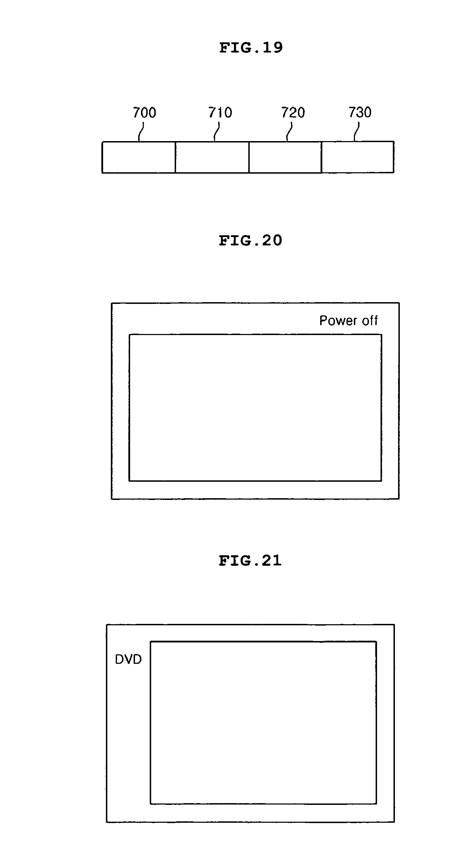

For example, when the presently displayed image is an image inputted through the antenna from the display module 100, the controller 110 may supply a heating voltage to a heating unit 700 of a plurality of heating units 700 to 730 corresponding to an area on which the character "Antenna" is printed using the thermochromic pigment as shown in Fig. 19. In this case, as shown in Fig. 15, the character "antenna" informing the image input mode may appear on a lower end of the non-display area.

As shown in Figs. 16 to 18, for informing an image input mode such as "Cable", "External input", or "HDMI" on the lower end of the non-display area using the thermal reaction pattern, the controller 110 may supply a heating voltage to the corresponding heating unit of the plurality of heating units 700 to 730.

Fig. 20 is view of a thermal reaction pattern according to a third embodiment. The thermal reaction pattern may change in synchronization with a time set by a user.

Referring to Fig. 20, a tune-off time of a display apparatus may be previously set through reservation set-up of a user. When a power supply into a display module 100 is blocked at the corresponding time, a character "Power off" printed with the thermochromic pigment may appear on an upper end of the non-display area.

In this case, the heater 120 may be disposed on only an area of the thermal reaction pattern printed with the thermochromic pigment of the upper end of the non-display area. The controller 110 may supply a hating voltage to the heater 120 at a time set by the user to display the character "Power off" on an upper portion of the non-display area as shown in Fig. 20.

Figs. 21 to 23 are views of a thermal reaction pattern according to a fourth embodiment. The thermal reaction pattern may change in synchronization with a kind of signal inputted into a display module from the outside.

For example, the controller 110 may receive information with respect to a kind of input signal from the display module 100 and selects one of a plurality of heating units according to the kind of input signal to supply the heating voltage to the selected heating unit.

In more detail, when the input signal is a DVD image/voice signal, the controller 110 may receive a signal having information that an input signal is the DVD image/voice signal from the display module 100 to supply a heating voltage into the heating unit corresponding to an area on which a character "DVD" is printed with the thermochromic pigment. Thus, as shown in Fig. 21, the character "DVD" that informs the kind of input signal may appear on a right side of the non-display area.

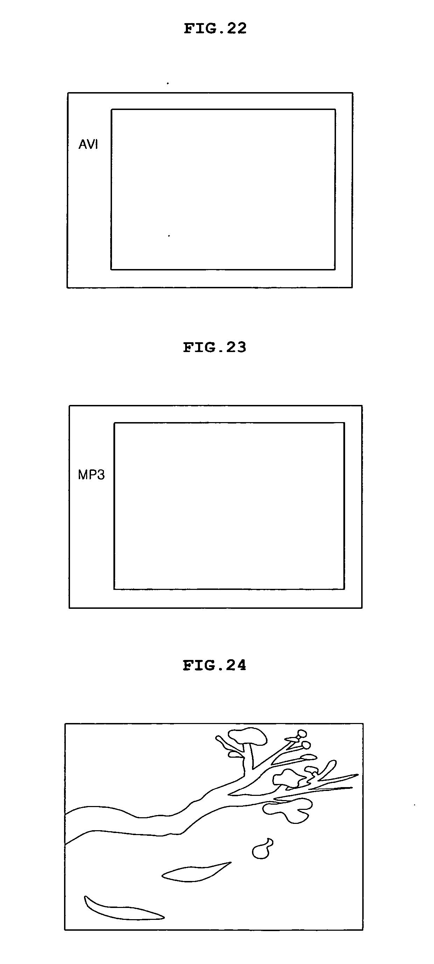

Also, as shown in Figs. 22 and 23, when the input signal is an AVI signal or MP3 voice signal, the controller 110 may supply a heating voltage into the heating unit corresponding to an area on which a character informing a kind of corresponding input signal is printed with the thermochromic pigment to express the kind of input signal on a right side of the non-display area.

Although the thermal reaction pattern is disposed on the non-display area 220 of the display apparatus 200 according to the current embodiment, the thermal reaction pattern may be disposed on a front surface of the display apparatus 200 including a display area 210.

Fig. 24 is view of a thermal reaction pattern according to a fifth embodiment. Here, the thermal reaction pattern may be disposed on the entire area of a front surface of the display apparatus 200.

Referring to Fig. 24, the thermal reaction pattern may be disposed on the front surface of the display apparatus 200 including a display area 210. As a temperature of the thermal reaction pattern increases at a temperature greater than a critical temperature, the thermal reaction pattern disposed on the front surface of the display apparatus 200 may be displayed.

However, light emitted from the display module 100 should be emitted through a front surface of the display area 210. Thus, the thermochromic pigment constituting the thermal reaction pattern may not visibly appear because the thermochromic pigment is transparent at a temperature less than the critical temperature. Also, the thermochromic pigment may have a special color at a temperature greater than the critical temperature. In addition, a heater 120 may be disposed on a non-display area 220 to increase a temperature of the thermal reaction pattern.

Also, the thermal reaction pattern may be directly printed on one surface of a transparent window 300 disposed on a front surface of the display module 100. Alternatively, the thermal reaction pattern may be printed on one surface of a transparent heat transfer layer disposed under the transparent window, e.g., an acrylic plate.

When the heater 120 is disposed on the non-display area 220, heat may be not well transferred into a portion away from the non-display area 220, e.g., a thermochromic pigment printed on a central portion. Thus, a layer on which the thermal reaction patter is printed may be formed of a material having high conductivity as well as high light transmittance.

Also, when the heater 120 includes a transparent layer having high transmittance, the heater 120 may be disposed on the entire front surface of the display apparatus 200, e.g., a front surface of the transparent window including the thermal reaction pattern.

As shown in Fig. 24, the thermal reaction pattern disposed on the front surface of the display apparatus 200 may be displayed at a time point at which the display apparatus 200 becomes power-off.

For example, the controller 110 may control the heat generation of the heater 120 so that the thermal reaction pattern is displayed from a time point at which the display apparatus 200 becomes power-off to a time point at which the display apparatus 200 becomes power-on.

Also, the thermal reaction pattern may be displayed on the front surface of the display apparatus 200 according to a user's input. For example, when the user inputs a specific key through an input unit disposed on a remote control or the display apparatus 200, the thermal reaction pattern may appear or disappear on the front surface of the display apparatus 200 as shown in Fig. 12.

Also, the user may set a specific time period in which the thermal reaction pattern is displayed through an on screen display menu of the display apparatus 200. Alternatively, the user may set so that the thermal reaction pattern is displayed for a predetermined time from a time point at which the display apparatus 200 becomes power-off.

However, at the time point at which the display apparatus 200 become power-on, the controller 110 may control the heater 120 to stop the heat generation of the heater 120 so that the thermal reaction pattern displayed on the front surface disappears. Also, in the state of the power-on of the display apparatus 200, the controller 110 may control the heater 120 so that the thermal reaction pattern is not displayed even though the user's input or reservation set-up is performed.

As described above, the thermal reaction pattern of the pattern that allow the user to feel the esthetic appearance may be displayed on the front surface of the display apparatus 200 during the power-on of the display apparatus 200. Also, an interior function such as a picture frame in addition to the function of the display apparatus 200 may be added during the power-off of the display apparatus 200 to improve the outer appearance and utilization of the display apparatus 200.

According to the embodiments, the pattern disposed on the front surface of the display apparatus may change in synchronization with the input signal through the temperature control. Thus, the outer design of the display apparatus may be improved to perform the main function for displaying an image and also improve user's sensitive satisfaction.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display apparatus comprising:
a display module;
a thermal reaction pattern changing according to a temperature;
a heater generating heat to vary a temperature of the thermal reaction pattern; and
a controller controlling the heat generation of the heater,
wherein the thermal reaction pattern changes in synchronization with a signal inputted into the controller.

2. The display apparatus according to claim 1, wherein the thermal reaction pattern is formed of a thermochromic pigment that changes in color on the basis of a critical temperature.

3. The display apparatus according to claim 2, wherein the critical temperature ranges from about 38 degrees to about 50 degrees.

4. The display apparatus according to claim 1, further comprising a heat transfer layer for transferring the heat generated in the heater into the thermal reaction pattern,
wherein the thermal reaction pattern is printed with a thermochromic pigment on one surface of the heat transfer layer.

5. The display apparatus according to claim 4, wherein the heat transfer layer is formed of at least one of paper, acrylic, aluminum (Al), and copper (Cu).

6. The display apparatus according to claim 5, wherein the heat transfer layer formed of the paper has a thickness of about 0.15 mm to about 0.5 mm.

7. The display apparatus according to claim 1, wherein the thermal reaction pattern changes in synchronization with a signal having information with respect to an operation state of the display apparatus.

8. The display apparatus according to claim 7, wherein the thermal reaction pattern is displayed for a predetermined time from a time point at which a power is supplied into the display apparatus.

9. The display apparatus according to claim 1, wherein the thermal reaction pattern changes in synchronization with a signal inputted from an external apparatus.

10. The display apparatus according to claim 1, wherein the thermal reaction pattern is divided into a plurality of areas,
the heater comprises a plurality of heating units respectively corresponding to the plurality of areas of the thermal reaction pattern, and
the plurality of heating units are independently controlled by the controller.

11. The display apparatus according to claim 10, further comprising a plurality of relays respectively connected to the plurality of heating units to successively supply a heating voltage into the plurality of heating units with a time interval.

12. The display apparatus according to claim 11, wherein each of the heating units comprises at least one film heater for receiving the heating voltage from the controller to generate heat, and
the heating voltage supplied from the controller into the film heater ranges from about 10 V to about 15 V.

13. A display apparatus comprising a display area on which an image is displayed and a non-display area on which an image is not displayed, the display apparatus comprising:
a display module;
a thermal reaction pattern disposed on the non-display area, the thermal reaction pattern changing according to a temperature; and
a heater generating heat to vary a temperature of the thermal reaction pattern,
wherein the thermal reaction pattern is displayed or not displayed on the non-display area according to an image appearing on the display area.

14. The display apparatus according to claim 13, wherein the thermal reaction pattern is displayed or not displayed according to whether an image is displayed on the display area.

15. The display apparatus according to claim 14, wherein the thermal reaction pattern is displayed during the non-display of the image on the display area.

16. The display apparatus according to claim 14, wherein the thermal reaction pattern is displayed for a predetermined time from a time point at which a power is supplied into the display apparatus to a time point at which the image is displayed on the display area.

17. The display apparatus according to claim 13, wherein the thermal reaction pattern is displayed or not displayed according to a kind of image displayed on the display area.

18. The display apparatus according to claim 13, wherein the thermal reaction pattern is displayed or not displayed according to a change of the image displayed on the display area.

19. The display apparatus according to claim 13, wherein a thermochromic pigment constituting the thermal reaction pattern has the same color as that of the non-display area at a temperature less than a critical temperature.

20. The display apparatus according to claim 19, wherein the thermochromic pigment has a black color at the temperature less than the critical temperature.
